# FASCICULE DE BREVET EUROPEEN

(11) **EP 0 869 927 B1**
(45) Date de publication et mention de la délivrance du brevet: **19.11.2003**
(21) Numéro de dépôt: 97912278.5
(22) Date de dépôt: 29.10.1997
(51) Int. Cl.: C03C 25/20, C08J 5/08

(54) **FILS DE VERRE ENSIMES DESTINES AU RENFORCEMENT DE MATIERES POLYMERES**
GESCHICHTETE GLASFASERN FÜR DIE VERSTÄRKUNG VON POLYMEREN
SIZED GLASS FIBERS FOR REINFORCING POLYMER MATERIAL

(30) Priorité: 29.10.1996 FR 9613174
(43) Date de publication de la demande: 14.10.1998
(73) Titulaire: Saint-Gobain Vetrotex France S.A., 73000 Chambéry (FR)
(72) Inventeur: GONTHIER, Michel, F-73000 Jacob-Bellecombette (FR)
(74) Mandataire: Renous Chan, Véronique
(86) Numéro de dépôt international: FR9701938
(87) Numéro de publication internationale: WO98018737

(56) Documents cités:
- WO-A-95/09133
- FR-A- 2 186 440
- US-A- 3 968 068
- US-A- 4 358 501
- US-A- 4 457 970

## Description

L'invention concerne des fils de verre ensimés destinés au renfort de matières organiques du type polymère, de façon à obtenir des matériaux dits composites à propriétés mécaniques améliorées.

Elle concerne également les compositions d'ensimage utilisées pour revêtir lesdits fils, le procédé de fabrication des composites et les composites ainsi obtenus.

De manière connue, la fabrication de fils de verre de renforcement est réalisée à partir de filets de verre fondu s'écoulant d'orifices de filière, filets qui sont étirés mécaniquement sous forme de filaments continus. Ces filaments sont recouverts d'une composition d'ensimage habituellement en solution aqueuse, par passage sur des organes ensimeurs du type rouleaux d'enduction, avant d'être assemblés sans torsion en fils de base, qui sont ensuite collectés, notamment par bobinage sur un support en rotation.

L'utilisation de compositions d'ensimage est rendue nécessaire pour différentes raisons : en premier lieu, au stade de la fabrication des fils de renforcement, l'ensimage sert de lubrifiant, en protégeant les fils de l'abrasion résultant du frottement à grande vitesse de ces derniers sur divers organes collecteurs, bobineurs, etc..

En outre, notamment une fois l'ensimage séché, polymérisé et/ou réticulé, celui-ci assure une certaine cohésion, une certaine intégrité aux fils en créant des liaisons inter-filaments, ce qui évite des ruptures de fils intempestives, et facilite leur manipulation.

En second lieu, au stade de la fabrication du matériau composite, l'ensimage favorise le mouillage/l'imprégnation des fils par la matrice de polymère à renforcer - ci-après désignée sous le terme de « résine » - en aidant à la création de liaisons fils/matrice. De la qualité de l'adhérence fils/matrice et de l'aptitude au mouillage ou à l'imprégnation dépendent notamment les propriétés mécaniques du matériau composite final et sa résistance à l'osmose.

On voit donc que pour assumer tous ces rôles, les formulations des compositions d'ensimage pour fils de verre de renfort sont très complexes à mettre au point, car elles doivent prendre en compte de nombreux paramètres de fabrication et vont dépendre notamment du type de fils à revêtir, du type de polymère utilisé pour la résine du composite et, enfin, et surtout du mode de fabrication même du composite.

L'invention s'intéresse particulièrement à des ensimages pour fils de renfort que l'on incorpore à des matrices de polymère de type thermodurcissable tel que ceux appartenant à la famille des polyesters et/ou des époxydes pour fabriquer des pièces composites par des procédés connus sous le terme de « procédés à moule ouvert », c'est-à-dire des procédés par moulage simple, sans contre-moule, qui ont l'avantage de permettre de réaliser, sans investissement important, des prototypes, les pièces à l'unité ou en petite série, avec une grande liberté dans le choix de la forme et de la taille des pièces.

Elle concerne plus particulièrement les ensimages pour des procédés à moule ouvert appelés « moulages par projection simultanée », où la dépose de la matière dans le moule est pratiquée au moyen d'un pistolet de projection qui coupe le verre et le projette sur le moule en même temps que la résine. L'opération est usuellement complétée par passage d'un rouleau cannelé qui assure un lissage et un « ébullage » de surface. L'application éventuelle sur le moule d'une couche de résine pure ou « gel-coat » permet d'obtenir une face finie de bel aspect.

Si la mise en oeuvre du moulage à projection simultanée est assez simple, elle impose aux fils de verre, et tout particulièrement à leur ensimage, des caractéristiques bien spécifiques à cette technique, caractéristiques qui peuvent apparaître comme difficilement compatibles les unes avec les autres.

En effet, il est important que les fils après coupe conservent leur intégrité, ne se « filamentisent » pas, jusqu'à la fin de la projection contre le moule. En outre, il est important que la projection des fils coupés soit effectuée de manière bien dispersée, afin que ceux-ci constituent contre le moule un « tapis » très régulier en densité et en épaisseur.

Il est également nécessaire d'obtenir une imprégnation à la fois rapide et complète des fils de renforcement par la résine, car il n'y a pas ici d'étape distincte de mélange par malaxage entre résine et fils de renforcement. L'ensimage doit donc aider à cette imprégnation, en étant très compatible chimiquement avec la résine pour établir des liaisons fils/résine.

Mais par ailleurs, il est tout aussi nécessaire qu'une fois la projection effectuée, le mélange résine/fils de renfort présente une bonne « tenue » en paroi verticale, aussi bien avant qu'après l'opération de lissage par le rouleau, c'est-à-dire qu'il n'y ait pas « d'affaissement » du mélange ou de la résine tendant à s'accumuler dans la partie la plus basse du moule ouvert.

Il est donc aussi important que ce mélange présente une rigidité suffisante, avec un « réseau » de fils de renfort qui puisse maintenir en place la résine contre la surface du moule, ce qui va plutôt dans le sens d'un ensimage moins « compatible », moins « soluble » dans la résine.

Il faut donc trouver un compromis, pour que la formulation de l'ensimage convienne. Il est ainsi connu du brevet FR-2 279 688 un ensimage adapté à ce type de moulage qui utilise un mélange aqueux à base d'acétate de polyvinyle, d'un lubrifiant, de chlorure méthacrylate chromique et de gamma (éthylène diamine) propyldiméthoxysilane. Avec un seul agent filmogène collant en acétate de polyvinyle, il apparait que le compromis ne peut s'opérer qu'au détriment soit de la vitesse d'imprégnation, soit de la tenue, sans arriver à optimiser ces deux propriétés en même temps.

Le brevet US-A-3 968 068 décrit un ensimage aqueux comprenant un acétate de polyvinyle et un copolymère d'acétate de polyvinyle.

L'invention a alors pour but la mise au point d'un nouvel ensimage pour fils de renforcement qui soit particulièrement adapté à la technique de moulage à moule ouvert, notamment par projection simultanée, et qui permette, notamment, d'atteindre conjointement une meilleure imprégnation fils/résine et une meilleure tenue du mélange dans le moule.

L'invention a pour objet des fils de verre revêtus d'une composition d'ensimage qui est notamment obtenue à partir d'une solution aqueuse et qui comprend comme agents filmogènes collants l'association d'au moins un acétate de polyvinyle de poids moléculaire au plus égale à 60.000 (ci-après désigné « A ») et d'au moins un copolymère d'acétate de polyvinyle auto-réticulable thermiquement (ci-après désigné « B »), dans un rapport pondéral A/B supérieur ou égal à 1.

Il convient, à ce sujet, de préciser que par « fils de verre revêtus d'une composition d'ensimage » on entend, selon l'invention, des fils de verre « qui ont été revêtus d'une composition d'ensimage comprenant ... », c'est-à-dire non seulement les fils revêtus de la composition en question obtenus au sortir du ou des dispositifs de dépôt d'ensimage (les composants de la composition d'ensimage pouvant éventuellement être déposés séparément ou en plusieurs étapes), mais également ces mêmes fils après séchage et/ou après d'autres traitements visant, par exemple, à éliminer certains composants de la composition d'ensimage (notamment l'eau incluse dans la composition lorsque la composition se présente sous forme d'une solution ou dispersion aqueuse) et/ou à polymériser et/ou à réticuler certains composants de ladite composition.

Toujours dans le contexte de l'invention, on comprend par « auto-réticulable » thermiquement un copolymère possédant un certain nombre de fonctions aptes à réagir à la chaleur et à créer dans le réseau du copolymère des liaisons supplémentaires, sans nécessiter d'ajout d'agent réticulant spécifique, liaisons visant à réticuler le copolymère et/ou à augmenter son degré de polymérisation. Par « auto-réticulable », on comprend également un polymère apte à réticuler avec au moins un autre constituant de la composition d'ensimage, notamment avec l'alcool polyvinylique contenu dans l'acétate de polyvinyle à bas poids moléculaire A ou encore un silane, un agent plastifiant...

Comme évoqué précédemment, l'invention concerne le copolymère « B » lorsqu'il est auto-réticulable, mais aussi quand il a partiellement ou totalement réticulé après un traitement thermique donné des fils. La réticulation peut être facilitée par un agent catalyseur, notamment du type sel d'ammonium quaternaire.

L'invention, par ailleurs, par le terme « auto-réticulable », n'exclut cependant pas la possibilité d'incorporer à l'ensimage un agent réticulant.

Dans le contexte de l'invention, on comprend par fils non seulement les fils de base obtenus par rassemblement sans torsion d'une multitude de filaments sous filière, mais également tous les produits dérivés de ces fils de base, notamment les assemblages de ces fils de base en stratifils.

Ainsi, il peut s'agir de stratifils « assemblés », qui sont obtenus en dévidant simultanément plusieurs enroulements de fils de base puis en les rassemblant et en les bobinant sur un support en rotation sous forme de mèches de fils de base. Il peut aussi s'agir de stratifils « directs », qui sont des mèches d'un titre (masse linéique) équivalent à celui des stratifils assemblés, mais qui sont directement obtenues sous filière à partir d'une multitude de filaments avant d'être bobinées sur des supports en rotation.

La combinaison des composés « A » et « B » s'est révélée extrêmement intéressante pour des ensimages de fils de verre destinés à être utilisés dans des techniques de moulage par projection simultanée. Les propriétés des composés « A » et « B » sont en effet tout-à-fait complémentaires : l'acétate de polyvinyle à bas poids moléculaire A présente une grande compatibilité chimique avec les résines usuellement utilisées dans ces techniques, c'est-à-dire les résines polyester et/ou époxy. De fait, il est apte à se « solubiliser » très rapidement et totalement dans ces types de résine, ce qui permet d'atteindre une imprégnation élevée et rapide des fils de renfort par la résine et de favoriser la conformabilité de l'ensemble. Et cette caractéristique avantageuse n'a pas à s'obtenir au détriment de la tenue mécanique du mélange fils/résine, car le composé « B », moins « soluble » dans la résine, va garantir en parallèle une rigidité suffisante des fils de renfort, permettre d'assurer une projection bien dispersée et de maintenir l'ensemble fils/résine en place dans le moule jusqu'à la fin des opérations de moulage. On a donc à la fois un bon « accrochage » de la résine par le réseau de fils de renfort et une bonne répartition/dispersion des deux types de matériaux au sein du mélange.

En modulant les teneurs respectives en composés « A » et « B » de la composition d'encollage, on peut optimiser au mieux les propriétés recherchées. Un ratio pondéral A/B d'au moins 1, est choisi car en choisissant un ratio inférieur, l'imprégnation des fils par la résine est rarement suffisante. Avantageusement, on se place dans un ratio pondéral A/B compris entre 1,3 et 10, notamment entre 2,5 et 6,0 .

Les caractéristiques de chacun des composés « A » et « B » peuvent également être ajustées au mieux en fonction du type de fil, ou du type de résine exact.

Ainsi, on choisit de préférence un acétate de polyvinyle « A » de poids moléculaire en masse (déterminée par chromatographie par perméation de gel) compris entre 60.000 et 40.000, par exemple d'environ 50.000. Cette gamme de poids correspond en effet usuellement à ce que l'on entend par « bas poids moléculaire » pour un polymère de ce type. Elle va lui permettre de se « solubiliser » facilement dans la résine. Une autre façon de mesurer quantitativement cette propriété est d'évaluer la solubilité à chaud dans le toluène du composé « A ». Avantageusement, on sélectionne un acétate de polyvinyle qui présente une telle solubilité d'au moins 70%, notamment comprise entre 70 et 95%, notamment d'environ 85%.

En ce qui concerne le copolymère « B », celui-ci est donc issu de la copolymérisation d'acétate de polyvinyle et d'au moins un autre type de monomère. Un exemple particulier de ce copolymère est un copolymère d'acétate de polyvinyle et de N-méthylolacrylamide. Il est choisi afin d'être nettement moins « soluble » que « A » dans la résine, et on peut évaluer cette moindre solubilité en mesurant sa solubilité à chaud dans le toluène, tout comme pour « A ». On choisit le copolymère « B » de préférence pour qu'il présente une solubilité à chaud dans le toluène d'au plus 60%, et notamment d'environ 50%.

Par ailleurs, il peut être avantageux d'introduire dans la composition d'encollage au moins un agent plastifiant, ci-après désigné agent « C », qui va plastifier au moins partiellement l'acétate de vinyle « A » et/ou le copolymère « B ». En assouplissant les chaînes de(s) polymère(s) « A » et/ou « B », il abaisse leur température de transition vitreuse Tg. Sa présence permet d'améliorer la conformabilité du mélange fils/résine, c'est-à-dire son aptitude à épouser au mieux des formes de moules complexes. Comme agents plastifiants, on peut utiliser des dérivés du glycol, par exemple un mélange de dibenzoate de diéthylène glycol et de dibenzoate de propylène glycol. La teneur en plastifiant dans la composition d'ensimage est à ajuster afin d'obtenir l'effet voulu de bonne conformabilité tout en conservant une certaine raideur aux fils de renforcement. On peut ainsi avantageusement choisir d'introduire un ou des plastifiants « C » dans la composition de façon à ce que le ratio pondéral C/(A + B) soit compris entre 0,05 et 0,2, notamment entre 0,10 et 0,15 .

Lors de la préparation de la composition d'ensimage en phase aqueuse, pour faciliter et surtout accélérer la réaction de plastification de « A » et/ou « B », il est avantageux d'associer, au moins un agent tensio-actif au(x) plastifiant(s), quand ces derniers sont peu ou pas solubles dans l'eau. Cet agent tensio-actif, appelé par la suite « D », est avantageusement non-ionique, et par exemple choisi parmi les dérivés de polyéthylène glycol de poids moléculaire d'au plus 400.

En améliorant la solubilisation du ou des plastifiants, l'utilisation d'un tensio-actif « D » entraîne un gain de temps dans la fabrication de la composition d'ensimage, la plastification s'effectuant beaucoup plus vite, par exemple en une durée de l'ordre de 30 minutes.

Par ailleurs, la composition d'ensimage selon l'invention peut avantageusement comprendre un certain nombre d'additifs.

La composition d'ensimage peut aussi comprendre au moins un agent de couplage permettant d'accrocher l'ensimage à la surface du verre. Il peut s'agir notamment de composés choisis dans la famille des silanes, et plus particulièrement de l'association d'au moins deux silanes tels qu'un amino-silane, ci-après désigné par « E », et un silane insaturé tel qu'un vinyl-silane ou un méthacrylsilane, ci-après désigné par « F ». Cette association est préférée, dans la mesure où ces deux silanes jouent des rôles assez complémentaires, un peu à la manière de l'acétate de polyvinyle « A » par rapport au copolymère « B ». En effet, l'amino-silane « E » contribue à favoriser une projection bien dispersée et une bonne « tenue » mécanique du mélange fils/résine dans le moule, tandis que le silane insaturé « F » a plutôt tendance à améliorer l'imprégnation/le mouillage de fils par la résine. L'association de ces deux types de silanes favorise en outre l'aptitude du fil à bien se couper. Il est à noter que cette association permet de conférer aux fils une qualité de coupe équivalente à celle obtenue généralement avec des fils dont la composition d'ensimage comprend des dérivés de chrome ou de titane.

La composition d'ensimage peut aussi contenir au moins un agent lubrifiant et/ou anti-statique, ci-après désigné par « G », notamment un composé cationique du type sel organique d'ammonium quaternaire. Cet agent favorise notamment la protection de fils vis-à-vis de l'abrasion mécanique lors de leur fabrication.

Tous ces additifs concourrent en fait à l'obtention de fils de renforcement que l'on puisse fabriquer aisément, qui conservent leur intégrité, qui se prêtent sans problème à une opération de coupe et qui s'incorporent de manière satisfaisante à la résine lors de la fabrication du composite.

De préférence, la teneur des différents composés constitutifs de la composition d'ensimage est choisie de façon à ce que son extrait sec soit compris entre 2 et 10%, et notamment d'environ 6%.

Les fils revêtus selon l'invention présentent avantageusement un diamètre de filaments de 12 à 15 micromètres, notamment de 13 micromètres, et un titre (ou masse linéique) de 40 à 60 tex, notamment d'environ 45 tex (1 tex correspond à 1g/km).

Utiliser des diamètres de filaments d'au moins 12 micromètres n'est pas habituel dans le cas de moulage par projection simultanée, où l'on préfère plutôt des diamètres de filaments de 10 ou 11 micromètres afin de favoriser la bonne imprégnation des fils par la résine. Mais grâce à la composition d'ensimage selon l'invention, on peut se permettre d'utiliser de tels diamètres de filaments sans préjudice sur la capacité d'imprégnation des fils et de conformabilité de l'ensemble fils-matière polymère, ce qui est avantageux sur le plan industriel : il est bien connu que fabriquer des filaments de diamètre relativement élevé permet d'atteindre de meilleurs rendements de fibrage, le risque de casse des fils dans la ligne de production étant, notamment, moindre.

On préfère utiliser des titres de fils de 40 à 60 tex, c'est-à-dire pas très élevés pour différentes raisons : d'abord, en utilisant des diamètres de filament relativement élevés, on a intérêt à choisir, parallèlement, des titres de fils peu élevés : ainsi, on ne risque pas d'augmenter de manière trop importante la raideur du fil, une trop grande raideur de fil étant défavorable à une bonne conformabilité du mélange fils/résine contre le moule. Ensuite, avec un fil de titre peu élevé, on a une bonne répartition des fils dans la résine, on obtient un réseau de fils coupés projeté bien régulier, bien homogène et dense, qui présente de fait une surface de perméabilité réduite. De ce fait, la surface des fils de renforcement en contact avec la résine est optimale, le taux de résine « absorbé » par les fils est augmenté et la tenue sur la paroi du moule du mélange est, avant le passage du rouleau, nettement favorisée.

Un avantage subsidiaire à l'utilisation de fils de titre peu élevé est l'amélioration de l'aspect de surface du matériau composite une fois sa fabrication achevée : son aspect est en effet moins « marqué », moins « tendu », en ce sens que « l'empreinte » des fils est beaucoup moins visible, il y a beaucoup moins de relief.

On peut noter par ailleurs que l'invention s'applique à la fabrication de composite par projection simultanée, que l'on ait recours ou non à une couche de résine pure appelée « gel-coat » préalablement à la projection.

L'invention a aussi pour objet la composition d'ensimage elle-même, avant qu'elle ne soit déposée sur les fils de renforcement. De préférence, elle est préparée en solution aqueuse, et comporte :
□ l'acétate de polyvinyle « A » d'une teneur en pourcentage pondéral de la solution aqueuse comprise entre 5 et 9,
□ le copolymère « B » d'une teneur en pourcentage pondéral de la solution aqueuse compris entre 1 et 4, avec en outre un rapport pondérai A/B supérieur ou égal à 1,
□ des dérivés de silane, notamment un aminosilane « E » et un silane insaturé « F » d'une teneur en pourcentage pondéral de la solution aqueuse compris entre 0,05 et 5,
□ un (des) agent(s) plastifiant(s) « C », notamment du type dérivé(s) de glycol, d'une teneur en pourcentage pondéral de la solution aqueuse compris entre 0,4 et 0,9,
□ au moins un agent tensio-actif « D », d'une teneur en pourcentage pondéral de la solution aqueuse entre 0,1 et 0,4,
□ un (des) agent(s) lubrifiant(s) « G », notamment un sel organique d'ammonium quaternaire, d'une teneur en pourcentage pondéral de la solution aqueuse comprise entre 0,1 et 0,3.
□ éventuellement un acide organique « H » tel que l'acide formique en quantité suffisante pour régler le pH de la solution aqueuse à la valeur voulue.

Comme mentionné précédemment, la solution aqueuse est déposée sur les filaments qui vont constituer les fils de base. L'eau est usuellement évacuée par séchage des fils/stratifils une fois collectés. Et c'est pendant cette étape de séchage ou ultérieurement lors d'un traitement thermique spécifique, que s'opère la polymérisation/réticulation totale ou partielle notamment du composé « B ».

L'invention a également pour objet le procédé de fabrication d'une telle composition d'ensimage, procédé qui comporte de préférence une étape d'hydrolyse des dérivées de silane « E » et « F » dans une solution S1, une étape de plastification connue des composés « A » et « B » avec le composé « C », en présence de composés « D » et éventuellement « G » dans une solution S2 et enfin un mélange desdites solutions S1 et S2.

L'invention a également pour objet les matériaux composites associant les fils de renfort dont au moins une partie a été revêtue avec la composition d'ensimage telle que définie précédemment, et une matière polymère du type thermodurcissable tel que du polyester et/ou de l'époxy. Le taux de verre au sein des matériaux composites est généralement compris entre 20 et 40, notamment entre 25 et 35 % en poids.

L'invention a également pour objet le procédé de fabrication de ces matériaux composites, utilisant la technique de moulage par projection simultanée de la résine et des fils de verre ensimés et coupés contre un moule ouvert. L'utilisation de la composition d'ensimage selon l'invention ne se limite pas qu'à la technique de moulage par projection simultanée : la composition est plus généralement utilisable pour toute technique de fabrication de matériaux composites employant un renfort sous forme de fils de verre coupés. Il peut ainsi s'agir de technique de moulage par compression de mat pré-imprégné appelé parfois SMC (« Sheet Moulding Compound »), où l'on emploie un matériau sous la forme d'un pré-imprégné en feuille comprenant les fils de verre coupés, la résine et les adjuvants nécessaires. Il peut également s'agir de la technique de moulage par centrifugation, consistant à projeter fils coupés et résine à l'intérieur d'un mandrin soumis à une grande vitesse de rotation, la résine imprégnant le renfort sous l'effet de la force centrifuge.

D'autres détails et caractéristiques avantageuses de l'invention ressortent de la description ci-après à l'aide d'exemples non limitatifs :

### EXEMPLE 1

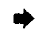 une composition d'ensimage selon l'invention a été fabriquée à l'aide des matières premières suivantes :
□ composé « A » : acétate de polyvinyle, de poids moléculaire 50.000 commercialisé par VINAMUL sous la référence « Vinamul 8852 »,
□ composé « B » : copolymère d'acétate de polyvinyle et de N-méthylolacrylamide, commercialisé par VINAMUL sous la référence « Vinamul 8828 »,
□ composé « C » : mélange de dibenzoate de diétylène glycol et de dibenzoate de propylène glycol dans un ratio 50/50 en poids, commercialisé par AKZO CHEMICAL sous la référence « K-Flex 500 ». Alternativement le composé « C » peut être également composé de butylbenzylphtalate, du type de celui commercialisé par MONSANTO sous la référence « Santicizer 160 » ou encore d'adipate de di-octyle, du type de celui commercialisé par BASF sous la référence « Plastomoll DOA »,
□ composé « D » : polyéthylène glycol de poids moléculaire 400, commercialisé par STERAN EUROPE sous la référence « Secoster ML 400 ». Alternativement, on peut utiliser du polyéthylène de poids moléculaire un peu supérieur, notamment de 1000 tel que celui commercialisé sous l'appellation « Carbowax 1000 »,
□ composé « E » : diamino-silane, commercialisé par OSI sous la référence « A 1126 », d'autres silanes aminés pouvant également convenir,
□ composé « F » : vinyltriéthoxysilane, commercialisé par OSI sous la référence « A 151 ». Ce composé « F » peut être constitué d'autres types de silanes insaturés. Il peut ainsi s'agir de vinyltri(βméthoxyéthoxy)silane ou de γ méthacryloxypropyltriméthoxysilane tels que ceux commercialisés par OSI sous respectivement les références « A172 » et « A174 »,
□ composé « G » : sel d'ammonium quaternaire, commercialisé par AKZO NOBEL CHEMICALS sous la référence « Arquad C35 » et de formule chlorure de coco-triméthyl ammonium. Ce composé « G » peut également être à base d'un sel d'ammonium quaternaire oxyéthylène commercialisé par DSM sous la référence « Neoxil A05620 », ou encore à base d'éthosulfate d'ammonium quaternaire alkoxylé commercialisé par HENKEL CORPORATION sous la référence « Emerstat 6660 ».
□ de l'acide formique, composé « H ».

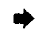 La composition d'ensimage est une solution aqueuse, on précise ci-dessus la teneur en poids de chacun des composés introduits par rapport au volume total d'eau en final :

| | |
|---|---|
| A | 6,50% |
| B | 2,60 % |
| C | 0,59 % |
| D | 0,26 % |
| E | 0, 26 % |
| F | 0,26 % |
| G | 0,20 % |
| H | quantité suffisante pour avoir un pH final d'environ 4,0. |

La fabrication de 3600 litres de la composition d'ensimage est réalisée de la manière suivante :
- a) - on effectue une hydrolyse commune des silanes « E » et « F » : on acidifie 1800 litres d'eau avec 1,5 kg d'acide formique à 80% en volume dans de l'eau. On introduit d'abord le silane « F » puis, 20 minutes plus tard, le silane « E ». On ajuste si nécessaire le pH de l'hydrolysat à 4,5 par ajout d'acide formique.
- b) - On effectue une plastification commune de l'acétate de polyvinyle « A » et du copolymère « B » : dans un bac séparé, on introduit successivement « A » puis « B ». On dilue à environ 400 litres d'eau, puis on ajoute successivement sans dilution préalable d'abord le composé « G », puis le mélange « D» plus « C ». On laisse le mélange sous agitation durant au moins 15 minutes puis on dilue le mélange jusqu'à environ 1000 litres d'eau. Grâce à l'association du plastifiant « C » et du tensio-actif non-ionique « D », cette étape de plastification est très courte,
- c) - on achève la fabrication : on verse le mélange plastifié dans l'hydrolysat, on ajuste le volume jusqu'à 3600 litres d'eau, on ajuste le pH à 4 par ajout d'acide formique si nécessaire, on ajuste l'extrait sec à environ 6,3%.

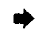 La composition d'ensimage ainsi réalisée est utilisée pour ensimer, de manière connue, des fils de base constitués de filaments de verre de 13 micromètres de diamètre et rassemblés sous forme d'enroulement, sous filière de 2400 trous, fils de base dont le titre est de 44 tex.
Le séchage des enroulements de fils de base est effectué également de manière connue par un traitement thermique adapté, séchage destiné à évacuer l'eau de la composition d'ensimage et à réticuler/polymériser au moins partiellement tous les composés de la composition susceptibles de l'être, et tout particulièrement ici le composé « B ». En général, l'étape de séchage dure de 12 à 18 heures selon le poids de l'enroulement, à une température de l'ordre de 110 à 140°C.
Toujours de manière connue en soi, les fils de verre sont ensuite rassemblés en stratifils assemblés (désignés aussi sous le terme anglo-saxon de « roving »), chaque stratifil étant constitué de 54 fils de base.
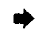 Les stratifils ainsi obtenus ont servi à la fabrication de pièces composites par la technique de moulage à moule ouvert dite de projection simultanée, dans les conditions suivantes :
□ le moule est un moule en forme d'escalier, comportant une paroi verticale de 1 mètre de haut, puis une marche d'escalier de 0,20 mètre de profondeur et 0,20 mètre de hauteur, puis 1 mètre de paroi horizontale. Cette dernière comporte deux rainures de 2 cm de profondeur pour évaluer la conformabilité du mélange résine/renfort,
□ la résine est une résine polyester insaturée orthophtalique de basse viscosité, de réactivité moyenne et non thixotropée. Il s'agit de la résine commercialisée par CRAY VALLEY sous la référence « Norsodyne S 2010 V ». Sa viscosité est de 5,6 poises à 18°C,
□ la projection contre le moule s'effectue à l'aide d'un pistolet commercialisé par MATRASUR sous la référence « Venus », avec deux couches croisées, verticalement et horizontalement,
□ la proportion résine/fils de renfort est telle que le composite contient en poids 27% de verre.

### EXEMPLE 2

Il est identique en tous points à l'exemple 1, mis à part le fait que les fils de base utilisés ont un titre non pas de 44 tex, mais de 60 tex.

### EXEMPLE 3

C'est un exemple comparatif, en ce sens que la composition d'ensimage de cet exemple n'utilise pas la combinaison des deux agents collants A et B de l'exemple 1, mais seulement le composé A d'acétate de polyvinyle, dans une teneur en poids dans la solution aqueuse de 9,1 %, (soit la somme des teneurs de A et de B de l'exemple 1) ; tous les autres paramètres étant maintenus identiques à ceux de l'exemple 1.

### EXEMPLE 4

C'est également un exemple comparatif, en ce sens que les conditions de l'exemple 1 sont reproduites, mais en utilisant comme renfort des fils de verre ensimés commercialisés par la société P.P.G. sous la référence « 6313 » comme étant adaptés à la technique de moulage par projection.

Le tableau 1 ci-dessous regroupe pour chacun de ces quatre exemples les données suivantes :
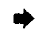 A - Les conditions de projection :
   □ le type de projection t-proj. exprimé en secondes,
   □ l'épaisseur du « tapis » formé par l'ensemble résine/verre sur le moule après projection, épaisseur exprimée en mm et mesurée sur la paroi verticale (e.v.), sur la marche e.m. et sur la paroi horizontale (e.h). Est également tirée de ces valeurs, l'épaisseur moyenne du tapis, (e.moy.),
   □ le temps de roulage (t.roul), exprimé en secondes, c'est-à-dire le temps pris par l'opération de débullage consistant à faire passer à la surface du « tapis » un rouleau cannelé,
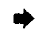 B - L'évaluation des performances du mélange verre/résine :
   □ la régularité du tapis (r.tapis),
   □ le taux de « bourre » votante, (b.vol), c'est-à-dire le taux d'envol de fibres lors de la projection,
   □ la facilité de roulage (f.roul),
   □ la conformabilité, observée dans la zone des rainures : (conf.),
   □ la tenue à la paroi : (tenue),
   □ la qualité de l'imprégnation : (imprég.)

Toutes ces évaluations sont exprimées sans unité, dans une échelle de 1 (le plus mauvais) à 3 (le mieux).

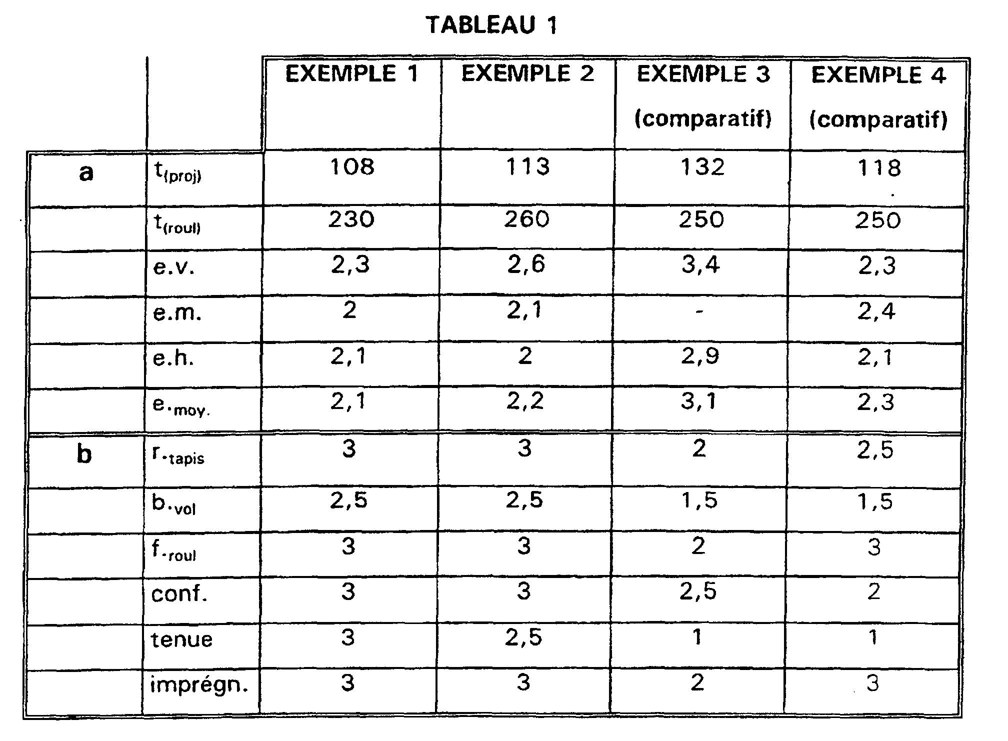

De la lecture de ce tableau, on voit que l'exemple 1 permet d'obtenir un « tapis » particulièrement régulier, avec une imprégnation rapide et, surtout, une bonne tenue en paroi verticale. C'est également le cas, dans une moindre mesure, pour l'exemple 2 qui présente une tenue en paroi verticale légèrement inférieure mais néanmoins suffisante.

Par contre, l'exemple 3 comparatif présente des résultats dans l'ensemble nettement moins bons que les deux autres : la qualité de l'imprégnation est insuffisante, la tenue en paroi verticale très mauvaise.

De même, l'exemple 4 comparatif présente également des résultats non satisfaisants, la tenue en paroi verticale étant également largement insuffisante.

On a par ailleurs reproduit la projection contre moule ouvert des exemples 1 et 2, mais cette fois en opérant non pas deux mais quatre projections successives : on les nomme exemples 1 bis et 2bis. Même en se plaçant ainsi dans des conditions plus délicates, on conserve une tenue en paroi verticale de l'ensemble résine/renfort largement suffisante (dans l'échelle précédente, évaluée à 3 pour l'exemple 1 bis et à 2 pour l'exemple 2bis), avec une excellente conformabilité (de 3 dans les deux cas), et une excellente imprégnation (également de 3 dans les deux cas).

En conclusion, on voit que combiner deux agents collants de type A et B est particulièrement avantageux, en ce sens qu'ils se complètent pour globalement améliorer très significativement les performances de l'ensimage, résultat que l'on ne peut attendre si on utilise que l'un ou l'autre de ceux-ci.

Il faut souligner l'un des avantages principaux de l'ensimage selon l'invention, qui est l'amélioration très significative de la tenue en paroi verticale de l'ensemble résine/fils de renfort sur moule, plus particulièrement dans le contexte d'une technique de moulage par projection simultanée.

En outre, on peut également souligner l'intérêt d'adapter également la composition du fil de verre, notamment son titre, en fonction du type de projection envisagé.

## Revendications

1. Fil de verre revêtu d'une composition d'ensimage, **caractérisé en ce que** ladite composition d'ensimage, notamment obtenue à partir d'une solution aqueuse, comprend comme agents filmogènes collants l'association :
- d'au moins un acétate de polyvinyle A de poids moléculaire au plus égal à 60.000,
- d'au moins un copolymère d'acétate de polyvinyle et d'au moins un autre monomère B auto-réticulable thermiquement dans un rapport pondéral A/B supérieur ou égal à 1.

2. Fil de verre revêtu selon la revendication 1, **caractérisé en ce que** le rapport pondéral A/B est compris entre 1,3 et 10, notamment entre 2,5 et 6,0.

3. Fil de verre revêtu selon l'une des revendications précédentes, **caractérisé en ce que** l'acétate de polyvinyle A a un poids moléculaire compris entre 60.000 et 40.000, notamment d'environ 50.000.

4. Fil de verre revêtu selon l'une des revendications précédentes, **caractérisé en ce que** l'acétate de polyvinyle A présente une solubilité à chaud dans le toluène d'au moins 70 %, notamment comprise entre 70 et 95 %, notamment d'environ 85 %.

5. Fil de verre revêtu selon l'une des revendications précédentes, **caractérisé en ce que** le copolymère B est un copolymère d'acétate de vinyle et de N-méthylolacrylamide.

6. Fil de verre revêtu selon l'une des revendications précédentes, **caractérisé en ce que** le copolymère B présente une solubilité à chaud dans le toluène d'au plus 60 %, notamment d'environ 50 %.

7. Fil de verre revêtu selon l'une des revendications précédentes, **caractérisé en ce que** la composition d'ensimage comprend au moins un agent plastifiant C de l'acétate de polyvinyle A et/ou du copolymère B, notamment appartenant à la famille des dérivés du glycol tel qu'un mélange de dibenzoate de diéthylène glycol et de dibenzoate de dipropylène glycol.

8. Fil de verre revêtu selon la revendication 7, **caractérisé en ce que** le rapport pondéral C/(A + B) est compris entre 0,05 et 0,2 notamment entre 0,10 et 0,15.

9. Fil de verre revêtu selon la revendication 7 ou 8, **caractérisé en ce que** la composition d'ensimage contient au moins un agent tensio-actif D, notamment non-ionique.

10. Fil de verre revêtu selon l'une des revendications précédentes, **caractérisé en ce que** la composition d'ensimage comprend au moins un agent de couplage, notamment appartenant à la famille des silanes, de préférence l'association d'au moins deux silanes tels qu'un amine-silane E et un silane insaturé F.

11. Fil de verre revêtu selon l'une des revendications précédentes, **caractérisé en ce que** la composition d'ensimage comprend au moins un agent lubrifiant et/ou anti-statique G, notamment cationique du type sel organique d'ammonium quaternaire.

12. Fils de verre revêtus selon l'une des revendications précédentes, **caractérisés en ce qu'**ils présentent un diamètre de filament de 12 à 15 micromètres, notamment de 13 micromètres, et un titre de 40 à 50 tex, notamment de 45 tex.

13. Fil de verre revêtu selon l'une des revendications précédentes, **caractérisé en ce que** l'extrait sec de la composition d'ensimage est compris entre 2 et 10 %, notamment d'environ 6 %.

14. Composition d'ensimage en solution aqueuse destinée à revêtir les fils de verre conformément à l'une des revendications précédentes, **caractérisée en ce qu'**elle comporte :
- un acétate de polyvinyle A de poids moléculaire au plus égal à 60.000, d'une teneur en pourcentage pondéral de la solution aqueuse comprise entre 5 et 9,
- un copolymère d'acétate de polyvinyle et d'au moins un autre monomère B auto-réticulable thermiquement, d'une teneur en pourcentage pondéral de la solution aqueuse compris entre 1 et 4, avec en outre un rapport pondéral A/B ≥ 1,
- un amino-silane E et un silane insaturé F d'une teneur en pourcentage pondéral de la solution aqueuse compris entre 0,05 et 5,
- un (des) agent(s) plastifiant(s) C, notamment du type dérivé(s) de glycol, d'une teneur en pourcentage pondéral de la solution aqueuse compris entre 0,4 et 0,9,
- au moins un agent tensio-actif D, d'une teneur en pourcentage pondéral de la solution aqueuse entre 0,1 et 0,4,
- un (des) agent(s) lubrifiant(s) G, notamment un sel organique d'ammonium quaternaire, d'une teneur en pourcentage pondéral de la solution aqueuse comprise entre 0,1 et 0,3.

15. Procédé de fabrication de la composition d'ensimage selon la revendication 14, **caractérisé en ce qu'**il comprend :
- une étape d'hydrolyse des dérivés de silanes E et F dans une solution S1,
- une étape de plastification commune des composés A et B avec « C », éventuellement en présence des composés D et G, dans une solution S2 ;
- un mélange des solutions S1 et S2.

16. Procédé de fabrication d'un matériau composite comprenant au moins une matrice polymère en résine du type thermodurcissable, tel que le polyester et/ou de l'époxy et des fils de verre de renforcement, au moins une partie desdits fils étant des fils revêtus selon l'une des revendications 1 à 13, **caractérisé en ce qu**'on utilise une technique de moulage par projection simultanée de ladite résine et desdits fils de verre ensimés et coupés contre un moule ouvert.

## Patentansprüche

1. Glasfaden, der mit einer Schlichtezusammensetzung überzogen ist, **dadurch gekennzeichnet, dass** die Schlichtezusammensetzung, die insbesondere aus einer wässrigen Lösung erhalten worden ist, als klebfähige filmbildende Mittel die Zusammenlagerung von
- mindestens einem Polyvinylacetat A mit einem Molekulargewicht von höchstens 60 000 mit
- mindestens einem Copolymer aus Polyvinylacetat und mindestens einem anderen thermisch selbstvemetzbaren Monomer B mit einem Gewichtsverhältnis von A/B von größer oder gleich 1
umfasst.

2. Beschichteter Glasfaden nach Anspruch 1, **dadurch gekennzeichnet, dass** das Gewichtsverhältnis von A/B 1,3 bis 10 und insbesondere zwischen 2,5 und 6,0 beträgt.

3. Beschichteter Glasfaden nach einem der vorhergehenden Ansprüche, **dadurch gekennzeichnet, dass** das Molekulargewicht von Polyvinylacetat A 60 000 bis 40 000 und insbesondere etwa 50 000 beträgt.

4. Beschichteter Glasfaden nach einem der vorhergehenden Ansprüche, **dadurch gekennzeichnet, dass** die Löslichkeit von Polyvinylacetat A in Toluol in der Wärme mindestens 70 %, insbesondere 70 bis 95 %, und speziell etwa 85 % beträgt.

5. Beschichteter Glasfaden nach einem der vorhergehenden Ansprüche, **dadurch gekennzeichnet, dass** das Copolymer B ein Vinylacetat-N-Methylolacrylamid-Copolymer ist.

6. Beschichteter Glasfaden nach einem der vorhergehenden Ansprüche, **dadurch gekennzeichnet, dass** die Löslichkeit des Copolymers B in Toluol in der Wärme höchstens 60 % und insbesondere etwa 50 % beträgt.

7. Beschichteter Glasfaden nach einem der vorhergehenden Ansprüche, **dadurch gekennzeichnet, dass** die Schlichtezusammensetzung mindestens einen Weichmacher C für das Polyvinylacetat A und/oder das Copolymer B enthält, der insbesondere zur Familie der Glykolderivate gehört, wie ein Diethylenglykoldibenzoat-Dipropylenglykoldibenzoat-Gemisch. 7, **dadurch gekennzeichnet, dass** das Gemisch.

8. Beschichteter Glasfaden nach Anspruch 7, **dadurch gekennzeichnet, dass** das Gewichtsverhältnis von C/(A + B) 0,05 bis 0,2 und insbesondere zwischen 0,10 und 0,15 beträgt.

9. Beschichteter Glasfaden nach Anspruch 7 oder 8, **dadurch gekennzeichnet, dass** die Schlichtezusammensetzung mindestens ein speziell nichtionisches Tensid D enthält.

10. Beschichteter Glasfaden nach einem der vorhergehenden Ansprüche, **dadurch gekennzeichnet, dass** die Schlichtezusammensetzung mindestens ein Haftmittel enthält, das insbesondere zur Familie der Silane gehört, vorzugsweise die Zusammenlagerung von mindestens zwei Silanen wie einem Aminosilan E und einem ungesättigtem Silan F.

11. Beschichteter Glasfaden nach einem der vorhergehenden Ansprüche, **dadurch gekennzeichnet, dass** die Schlichtezusammensetzung mindestens ein Gleitmittel und/oder antistatisches Mittel G enthält, das insbesondere kationisch vom Typ eines quaternären organischen Ammoniumsalzes ist.

12. Beschichtete Glasfäden nach einem der vorhergehenden Ansprüche, **dadurch gekennzeichnet, dass** sie einen Filamentdurchmesser von 12 bis 15 Mikrometern, insbesondere von 13 Mikrometern, und einen Titer von 40 bis 50 tex und insbesondere von 45 tex besitzen.

13. Beschichteter Glasfaden nach einem der vorhergehenden Ansprüche, **dadurch gekennzeichnet, dass** die Trockensubstanz der Schlichtezusammensetzung 2 bis 10 % und insbesondere etwa 6 % beträgt.

14. Schlichtezusammensetzung in einer wässrigen Lösung, die zum Beschichten der Glasfäden nach einem der vorhergehenden Ansprüche vorgesehen ist, **dadurch gekennzeichnet, dass** sie
- ein Polyvinylacetat A mit einem Molekulargewicht von höchstens 60 000 und einem gewichtsmäßigen Prozentanteil an der wässrigen Lösung von 5 bis 9,
- ein Copolymer aus Polyvinylacetat und mindestens einem anderen thermisch selbstvernetzbaren Monomer B mit einem gewichtsmäßigen Prozentanteil an der wässrigen Lösung von 1 bis 4 und außerdem mit einem Gewichtsverhältnis von A/B ≥ 1,
- ein Aminosilan E und ein ungesättigtes Silan F mit einem gewichtsmäßigen Prozentanteil an der wässrigen Lösung von 0,05 bis 5,
- einen oder mehrere Weichmacher C, insbesondere vom Typ Glykolderivat(e), mit einem gewichtsmäßigen Prozentanteil an der wässrigen Lösung von 0,4 bis 0,9,
- mindestens ein Tensid D mit einem gewichtsmäßigen Prozentanteil an der wässrigen Lösung von 0,1 bis 0,4 und
- ein oder mehrere Gleitmittel G, das (die) insbesondere aus (einem) quaternären organischen Ammoniumsalz(en) besteht (bestehen), mit einem gewichtsmäßigen Prozentanteil an der wässrigen Lösung von 0,1 bis 0,3,
umfasst.

15. Verfahren zur Herstellung der Schlichtezusammensetzung nach Anspruch 14, **dadurch gekennzeichnet, dass** es
- eine Stufe zur Hydrolyse der Silanderivate E und F in einer Lösung S1,
- eine Stufe zum gemeinsamen Weichmachen der Verbindungen A und B mit "C", gegebenenfalls in Gegenwart der Verbindungen D und G, in einer Lösung S2 und
- ein Vermischen der Lösungen S 1 und S2
umfasst.

16. Verfahren zur Herstellung eines Verbundmaterials, das mindestens eine polymere Matrix aus einem wärmeaushärtbaren Harz wie einem Polyester und/oder einem Epoxidharz und verstärkende Glasfäden umfasst, wobei mindestens ein Teil der Fäden beschichtete Fäden nach einem der Ansprüche 1 bis 13 sind, **dadurch gekennzeichnet, dass** eine Formgebung durch Faserspritzen dieses Harzes und dieser mit Schlichte überzogenen Kurzglasfäden auf eine offene Form angewendet wird.

## Claims

1. Glass fibre coated with a sizing composition, **characterised in that** said sizing composition, which is obtained especially from an aqueous solution, comprises as adhesive film-forming agents a combination of:
- at least one polyvinyl acetate A having a molecular weight of not more than 60,000, and
- at least one thermally self-crosslinkable copolymer of polyvinyl acetate and at least one other monomer B
in a ratio by weight A/B greater than or equal to 1.

2. Coated glass fibre according to claim 1, **characterised in that** the ratio by weight A/B is from 1.3 to 10, especially from 2.5 to 6.0.

3. Coated glass fibre according to any one of the preceding claims, **characterised in that** the polyvinyl acetate A has a molecular weight of from 60,000 to 40,000, especially of about 50,000.

4. Coated glass fibre according to any one of the preceding claims, **characterised in that** the polyvinyl acetate A has a solubility, when hot, in toluene of at least 70 %, especially from 70 to 95 %, especially of about 85 %.

5. Coated glass fibre according to any one of the preceding claims, **characterised in that** the copolymer B is a copolymer of vinyl acetate and N-methylacrylamide.

6. Coated glass fibre according to any one of the preceding claims, **characterised in that** the copolymer B has a solubility, when hot, in toluene of not more than 60 %, especially of about 50 %.

7. Coated glass fibre according to any one of the preceding claims, **characterised in that** the sizing composition comprises at least one plasticising agent C for the polyvinyl acetate A and/or for the copolymer B, especially belonging to the family of the glycol derivatives, such as a mixture of diethylene glycol dibenzoate and dipropylene glycol dibenzoate.

8. Coated glass fibre according to claim 7, **characterised in that** the ratio by weight C/(A+B) is from 0.05 to 0.2, especially from 0.10 to 0.15.

9. Coated glass fibre according to claim 7 or 8, **characterised in that** the sizing composition comprises at least one surface-active agent D, especially a non-ionic surface-active agent.

10. Coated glass fibre according to any one of the preceding claims, **characterised in that** the sizing composition comprises at least one coupling agent, especially belonging to the family of the silanes, preferably a combination of at least two silanes, such as an amine silane E and an unsaturated silane F.

11. Coated glass fibre according to any one of the preceding claims, **characterised in that** the sizing composition comprises at least one lubricating and/or antistatic agent G, especially a cationic lubricating and/or antistatic agent of the organic quaternary ammonium salt type.

12. Coated glass fibres according to any one of the preceding claims, **characterised in that** they have a filament diameter of from 12 to 15 micrometres, especially of 13 micrometres, and a linear mass of from 40 to 50 tex, especially of 45 tex.

13. Coated glass fibre according to any one of the preceding claims, **characterised in that** the solids content of the sizing composition is from 2 to 10 %, especially about 6 %.

14. Sizing composition in aqueous solution for coating glass fibres according to any one of the preceding claims, **characterised in that** it comprises:
- a polyvinyl acetate A having a molecular weight of not more than 60,000, having a % by weight content in the aqueous solution of from 5 to 9,
- a thermally self-crosslinkable copolymer of polyvinyl acetate and at least one other monomer B, having a % by weight content in the aqueous solution of from 1 to 4, further having a ratio by weight A/B ≥ 1,
- an amino silane E and an unsaturated silane F having a % by weight content in the aqueous solution of from 0.05 to 5,
- (a) plasticising agent(s) C, especially of the glycol derivative(s) type, having a % by weight content in the aqueous solution of from 0.4 to 0.9,
- at least one surface-active agent D, having a % by weight content in the aqueous solution of from 0.1 to 0.4,
- (a) lubricating agent(s) G, especially an organic quaternary ammonium salt, having a % by weight content in the aqueous solution of from 0.1 to 0.3.

15. Process for the production of the sizing composition according to claim 14, **characterised in that** it comprises:
- a step comprising hydrolysis of the silane derivatives E and F in a solution S1,
- a step comprising the joint plasticising of compounds A and B with "C", optionally in the presence of compounds D and G, in a solution S2;
- mixing of the solutions S1 and S2.

16. Process for the production of a composite material comprising at least one polymeric matrix of resin of the thermosetting type, such as polyester and/or epoxy, and reinforcing glass fibres, at least some of said fibres being coated fibres according to any one of claims 1 to 13, **characterised in that** there is used a technique of moulding by the simultaneous projection of said resin and of said sized and cut glass fibres against an open mould.
